# EUROPEAN PATENT APPLICATION

(11) **EP 3 318 814 A1**
(43) Date of publication of application: **09.05.2018**
(21) Application number: 15897179.6
(22) Date of filing: 02.07.2015
(51) Int. Cl.: F24J 2/24, F16L 53/00, F24J 2/40

(54) **SOLAR THERMAL COLLECTOR**

(71) Applicant: Chiyoda Corporation, Kanagawa 220-8765 (JP)
(72) Inventor: KANEMITSU, Masaya, Yokohama-shi Kanagawa 220-8765 (JP); SHIRAI, Jotaro, Yokohama-shi Kanagawa 220-8765 (JP); MARUYAMA, Kei, Yokohama-shi Kanagawa 220-8765 (JP); KAIDA, Ryuichi, Yokohama-shi Kanagawa 220-8765 (JP); TAMANO, Shiro, Yokohama-shi Kanagawa 220-8765 (JP); SUZUKI, Hiroshi, Yokohama-shi Kanagawa 220-8765 (JP)
(74) Representative: Prüfer & Partner mbB Patentanwälte · Rechtsanwälte
(86) International application number: PCT/JP2015/069088
(87) International publication number: WO 2017/002252

(57) **Abstract**

This invention is to provide a solar heat collection device capable of efficiently heating a heat transfer fluid flow path including several types of tube elements. The solar heat collection device 1 is provided with a heat transfer fluid flow path 2 allowing a heat transfer fluid to flow to light collecting positions of light collecting mirrors 3 for collecting a solar heat. The heat transfer fluid flow path 2 is formed by connecting several types of conductive tube elements in series including heat collecting elements 2a disposed at light collecting positions of the light collecting mirrors 3. Heating means 30 is provided to cause an electric current to flow in series to the heat collecting elements 2a, the flexible tube elements 2e and the piping 2b connected in series, thereby heating these tube elements. Bypass cables 2f through which an electric current flows in parallel with the piping 2b are provided in the piping 2b.

## Description

### Technical Field

The present invention relates to a solar heat collection device including a heat transfer fluid piping through which a heat transfer fluid flow.

### Background Art

As an example of a system for realizing an effective stable power supply using a renewable energy, there has been a solar heat power plant using a solar heat (see, for example, patent literatures 1, 2).

In such a power plant utilizing a solar heat, a solar heat is collected by a solar heat collection device, the heat thus collected is then sent to a heat exchanger through a heat transfer fluid to convert water into steam by the heat, thereby driving a turbine to generate electricity. The solar heat collection device has a heat collecting unit including: a reflecting mirror (light collecting mirror) for collecting light (collecting heat), the mirror having a concave cross section and extending in the same shape in the horizontal direction; heat collecting elements (heat receiving elements: receiver elements) through which a heat transfer fluid flows (circulates), disposed in light collecting positions based on the reflecting mirror. The solar heat collection device also includes piping for connecting a plurality of heat collecting elements. In addition, the heat collecting elements move together with the reflecting mirror in response to a change over time of the sun altitude (elevation angle). Besides, the heat collecting elements will expand and contract relatively greatly due to a temperature difference between daytime and nighttime, as well as between normal running and maintenance. Therefore, it is conceivable to provide flexible joints that are connected between fixed piping and heat collecting elements of the heat collection device.

Further, the heat collected by the solar collection device can be stored in a heat storage device through the heat transfer fluid, and such a stored heat can be returned to the heat exchanger again through the heat transfer fluid during a time period such as night in which solar heat fails to be collected, making it possible to generate electricity and thus ensuring a stabilized power supply.

As a heat transfer fluid used in a power generation plant, a synthetic oil is generally used. However, in recent years there has been an attempt to use a molten salt rather than a synthetic oil serving as such a heat transfer fluid.

When a heat transfer fluid that is a synthetic oil is replaced by a molten salt, the following advantages can be obtained.

First, it is possible to supply a higher temperature steam than prior art, so that one can expect an increased power generation efficiency and a reduced cost in power generation. Further, in a system that uses a molten salt as a heat transfer fluid, the capacity of a heat storage tank used in the system is allowed to be smaller than prior art. Moreover, since a conventional system (using a synthetic oil as a heat transfer fluid) also employs a molten salt as a heat storage transfer fluid, there is a need to exchange heat between the synthetic oil and the molten salt. In comparison, if an entire system is operated by using only a molten salt, the heat exchanger will become unnecessary and thus the plant can have a simpler configuration.

### Citation List

### Patent Literature

Patent Literature 1: US 2010/43776 A
Patent Literature 2: JP 2014-31787 A

### Summary of Invention

### Technical Problem

On the other hand, in the heat transfer fluid piping including the above-mentioned heat collecting elements through which molten salt serving as the heat transfer fluid flows (circulates) to the solar heat collection device, the heat transfer fluid is caused to flow by the pump. However, for example, when introducing the molten salt into heat transfer fluid piping at the time of start-up or when discharging the molten salt and then reintroducing the molten salt at the time of maintenance or the like, the molten salt will not be completely circulated through the heat transfer fluid piping including the heat storage device, and there is a possibility that the heat supply to the molten salt may be discontinued. At this time, it is necessary to heat the heat transfer fluid piping with a heating device so that the temperature of the molten salt will not be too low in the heat transfer fluid piping, thus preventing a solidification. A molten salt usually has a higher freezing point than a synthetic oil and thus solidifies when heat is dissipated in a state where heat is not supplied and there is a possibility that the heat collector elements will be blocked.

For example, in piping serving as heat transfer fluid piping fixedly arranged in portions other than the solar heat collection device of a solar heat power plant, a heating wire (electric heat trace) is provided as the above-mentioned heating device on the outer peripheral side of the above tube elements.

However, in the solar heat collection device, since the heat collecting elements occupying a large part of the heat transfer fluid piping have vacuum heat insulating parts on their outer peripheral portions, it is difficult to arrange such an electric heating wire. Further, there is a possibility that the electric heating wire may interfere with the reception of the collected sunlight. In addition, since the heat collecting elements will move as described above, the structure for supplying an electricity to the heating wire may become complicated. Further, as described above, flexible joints will deform responsively to a change in the length of the heat collecting elements due to their movements and a temperature change corresponding to a change in the altitude of the sun, it is difficult to install the electric heating wire. Accordingly, it is difficult to heat the heat transfer fluid piping of the solar heat collection device, and there is a concern that a high cost is required for heating the heat transfer fluid piping.

The present invention has been accomplished in view of the above circumstances, and it is an object of the present invention to provide a solar heat collection device capable of efficiently heating heat transfer fluid piping comprising several types of tube elements.

### Solution to Problem

In order to solve the aforementioned problems, the solar heat collection device of the present invention comprises:
a heat transfer fluid piping allowing a heat transfer fluid to flow to light collecting position of light collecting means for collecting a solar heat, wherein
the heat transfer fluid piping is formed by connecting in series several types of conductive tube elements including heat collecting elements disposed in light collecting position of the light collecting means;
heating means is provided for heating the tube elements of the heat transfer fluid piping by allowing an electric current to flow in series along the heat transfer fluid piping to several types of tube elements connected in series; and
bypass electricity path is provided to allow an electric current to flow in parallel to at least one of several types of tube elements.

According to such a configuration, the heat transfer fluid piping is caused to generate a heat so as to heat the heat transfer fluid piping, by supplying an electric current to the heat transfer fluid piping, without providing, for example, a heating wire or the like to the heat transfer fluid piping to heat the heat transfer fluid piping from the outside. Accordingly, if a heating wire is provided on the outer surface of each heat collecting elements, the heating wire will hamper the reception of collected sunlight, or if there is a vacuum heat insulating structure having a transparent outer tube elements around the outer circumference of each heat collecting elements, it will be difficult to attach a heating device such as a heating wire. In view of this, the present invention makes it possible to heat each heat collecting elements by causing an electric current to directly flow to each heat collecting elements and thus heating the elements.

Further, since there is a possibility that each flexible joints may be greatly deformed at the time of use, even if it is a tube element which makes it difficult to externally attach a heating device such as a heating wire, it is still possible to cause an electric current to flow therethrough to effect a desired heating.

In addition, it is also possible to simplify a structure for heating each tube elements, by arranging an electric current to flow in series to several types of tube elements connected in series, rather than individually causing an electric current to flow to different types of tube elements. However, when an electric current is caused to flow in series to different types of tube elements having different resistance values, the amounts of currents flowing through different types of tube elements will be the same. In this case, a resistance value varies depending on the type (material and shape) of the tube elements, and a heat generation amount also varies depending on the type of a tube element. In addition, since the temperature of a heat transfer fluid is higher than an ambient temperature, it is preferable that each heat transfer fluid piping is formed in a heat insulating structure so that heat does not escape. At this time, different heat insulating structures can be adopted for respective tube elements depending on their structures and usage situations, and since a heat insulating performance for each tube elements is different from one another, a heat dissipation amount varies depending on the type of an individual tube elements.

If an electric current is caused to flow in series to a plurality of tube elements of different types so as to heat these tube elements, there is a possibility that a temperature at the time of heating will become significantly different from one another depending on each tube element. In view of this, if a bypass electricity path is provided through which an electric current flows in parallel to a tube element which is such a type that its temperature at a time of heating will be higher than other types of tube elements, it is possible to reduce a current amount flowing to the tube elements at the time of heating, thus preventing an over-heating.

Because of the above, it is possible to heat each type of tube elements to an appropriate temperature using a simple structure in which a current is caused to flow in series to a plurality of tube elements of different types. Therefore, it is possible to heat the heat transfer fluid piping at a low cost.

Regarding the above configuration of the present invention, it is preferable that the heat transfer fluid is a molten salt.

According to the above-described configuration, it is possible to prevent the molten salt serving as a heat transfer fluid from solidifying in the heat transfer fluid piping. On the other hand, if the freezing point (melting point) of the molten salt is considerably high with respect to the room temperature, and if the molten salt is circulated through the heat transfer fluid piping after being irradiated by a light from the light collecting means and at a high temperature, or if a heat accumulated in a heat storage tank or the like is used to circulate the molten salt through the heat transfer fluid piping, it is impossible for the temperature of the molten salt to become too low, thereby preventing the molten salt from solidifying. However, when molten salt is introduced into the heat transfer fluid piping or when molten salt is discharged from the heat transfer fluid piping at start-up or during maintenance, there is still a possibility that the molten salt flowing through the heat transfer fluid piping will solidify on the way if the supply of heat is stopped. In view of this, heat transfer fluid piping is heated so as to prevent the molten salt from solidifying. On the other hand, the present invention is also applicable where a substance having a high freezing point other than a molten salt is used as a heat transfer fluid, or a substance which becomes viscous when cooled is used.

Further, in the above configuration of the present invention, it is preferable that the tube elements include the heat collecting elements which moves corresponding to sun altitude, fixed piping, and flexible joints connecting the heat collecting elements with the piping.

In this case, it is possible to use a simple structure to easily heat the heat collecting elements and the flexible joints which are difficult to employ an external heating device such as a heating wire, as described above.

Further, in the above configuration of the present invention, it is preferable that the bypass electricity path is provided in the piping.

According to such a configuration, since the piping does not deform as the flexible joints do, and since the piping will not be irradiated as much as the heat collecting elements are irradiated, it is possible to adopt a heat insulating structure having a high heat insulating performance at a low cost. Therefore, even if the piping does not have so high resistance value, there is still a possibility that it will be at a high temperature because of a small amount of heat dissipation when an electric current flows therethrough. Accordingly, if an amount of current flowing through the piping is reduced by providing a bypass electricity path in the piping, it is possible to prevent the piping from having an excessively high temperature with respect to the flexible joints and the heat collecting elements.

Further, in the configuration of the present invention, it is preferable that resistance value of the bypass electricity path is adjusted by adjusting at least one of material nature, sectional area and length of electric conductor through which an electric current flows in the bypass electricity path.

According to such a configuration, it is possible to easily adjust an amount of an electric current flowing through a tube element arranged in parallel with the bypass electricity path. In particular, if a resistance value is adjusted depending on the length of conductor, the adjustment of the resistance value will become easy. On the other hand, the resistance value can be adjusted by making use of the fact that the resistivity varies depending on the material of conductor.

In the configuration of the present invention, when heat transfer fluid is introduced into the heat transfer fluid piping and when the heat transfer fluid is discharged from the heat transfer fluid piping, the heating means heats the heat transfer fluid piping by applying an electric current to the tube elements.

With such a configuration, where the heat transfer fluid is introduced into the heat transfer fluid piping or discharged from the heat transfer fluid piping, although it is not possible to form a situation where a high temperature heat transfer fluid circulates through the heat transfer fluid piping and there is a possibility that the heat transfer fluid cools and solidifies in the middle of the way, it is still possible to exactly prevent the heat transfer fluid from solidifying.

Further, the above configuration of the present invention is such that:
the heat transfer fluid piping has two predetermined portions arranged substantially parallel to each other;
the heat collecting elements is disposed in each of the two predetermined portions, the heat collecting elements of one predetermined portion and the heat collecting elements of the other predetermined portion are substantially parallel with and adjacent to each other; and
a circuit including two heat collecting elements arranged substantially parallel to each other is constituted by wire-connecting the two predetermined portions of the heat transfer fluid piping, while the heating means causes an electric current to flow to the circuit.

According to such a configuration, if a distance between the predetermined portions arranged substantially parallel to each other in the heating transfer fluid piping is short, it is possible to reduce the length of a power transmission cable for constituting a closed circuit through which the current flows into the heat transfer fluid piping. In this way, it is possible to easily install the power transmission cable, and it is also possible to reduce a cost necessary for the power transmission cable and reduce the power transmission loss. On the other hand, in order to allow an electric current to flow through portions of the heat transfer fluid piping in which a plurality of heat collecting elements are connected in a substantially linear manner, if the power transmission cable is used to connect end with end through which the electric current of the heat transfer fluid piping flows, it is necessary to have a power transmission cable having a length substantially equal to that of a portion which allows the electric current of the heat transfer fluid piping to flow therethrough.

### Effects of Invention

According to the present invention, if an electric current is caused to flow to the heat transfer fluid piping consisting of several types of tube elements and thus causes the heat transfer fluid piping to generate a heat, it is possible to carry out a heating with a simple structure regardless of a tube element type as long as it is a tube element, thereby making it possible to prevent the temperature of a tube element from becoming too high, even if an electric current has flowed in series into the heat transfer fluid piping consisting of several types of tube elements.

### Brief Description of Drawings

Fig. 1 is a schematic view showing a solar heat collection system including a solar heat collection device formed according to an embodiment of the present invention.
Fig. 2 is a schematic front view showing a heat collecting unit of the solar heat collection device.
Fig. 3 is a schematic side view showing a connecting portion of two heat collecting units of the solar heat collection device.
Fig. 4 is a circuit diagram explaining a structure for supplying an electric current to the heat transfer fluid piping of the solar heat collection device to heat the same.

### Description of Embodiments

An embodiment of the present invention will be described in the following.

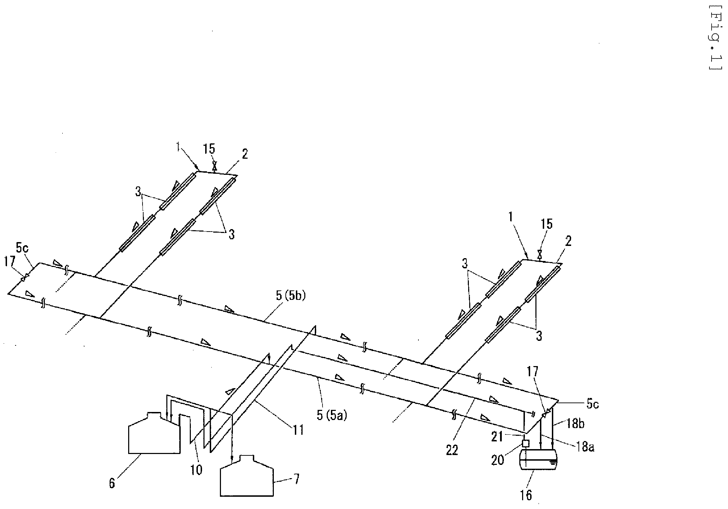

Fig. 1 shows a schematic configuration of a solar heat collection system including a solar heat collection device formed according to the first embodiment. The solar heat collection system comprises a plurality of solar heat collection device 1. Although Fig. 1 shows only two solar heat collection device 1, it is possible to have a large number (for example, 100 or more) of solar heat collection device 1. A solar heat collected by the solar heat collection system is sent to a power generation system via a heat transfer fluid so as to generate electricity. A solar heat power plant is comprised of the solar heat collection system and the power generation system.

Each solar heat collection device 1 has, for example, a substantially U-shaped heat transfer fluid piping 2, which is heated by a sunlight collected by a collector mirror (light collecting means) 3. As a result, a temperature of the heat transfer fluid flowing through the heat transfer fluid piping 2 rises to about 550 ° C.

In the present embodiment, a molten salt consisting of a mixture of sodium nitrate and potassium nitrate is used as a heat transfer fluid.

Also, in Fig. 1, what are indicated by small right triangles are gradient symbols. In accordance with these gradient symbols, a heat transfer fluid piping 2 and inclined pipes 5 (to be described later) are inclined with respect to the horizontal plane.

The heat transfer fluid piping 2 of each solar heat collection device 1 is connected to inclined pipes 5. The inclined pipes 5 are formed into a loop shape, and their left end portions in Fig. 1 are higher than their right end portions. Namely, the inclined pipes 5 are inclined downwardly to the right in Fig. 1 with respect to the horizontal plane. The inclined pipes 5 include two inclined pipes 5a and 5b arranged in parallel, and one inclined pipe 5a and the other inclined pipe 5b are connected by pipes 5c at both ends thereof.

Two tanks 6, 7 are connected to the inclined pipes 5. The tanks 6, 7 store the heat transfer fluid, with the tank 6 storing a heat transfer fluid before being heated by the solar heat collection devices 1, and the tank 7 storing a heat transfer fluid that has already been heated by the solar heat collection devices 1. Therefore, hereinafter, the tank 6 will be referred to as a cold-side tank 6 and the tank 7 will be referred to as a hot-side tank 7.

The cold-side tank 6 and the inclined pipe 5a are connected to each other by a connecting pipe 10, and the heat transfer fluid is sent from the cold-side tank 6 to the inclined pipe 5a by a pump (not shown) provided in the cold-side tank 6. The heat transfer fluid sent to the inclined pipe 5a branches at a connection between the connecting pipe 10 and the inclined pipe 5a and a part of heat transfer fluid flows to the right along the inclination of the inclined pipe 5a and the remaining of the heat transfer fluid flows to the left against the gradient of the inclined pipe 5a.

The hot-side tank 7 and the inclined pipe 5b are connected to each other by a connecting pipe 11, so that the heat transfer fluid heated by the solar heat collection device 1 is sent to the hot-side tank 7 by the pressure of the pump. Here, it is to be noted that the connecting pipe 11 can branch midway and can feed a heat transfer fluid to the cold-side tank 6 if necessary. For example, since the heat transfer fluid can not be heated by the solar heat collection device 1 during the night when the sun is not rising, the heat transfer fluid is fed only to the cold-side tank 6 by a switching valve provided in the branching position, thus preventing an unheated heat transfer fluid from being fed into the hot-side tank 7.

One end of the heat transfer fluid piping 2 of the solar heat collection device 1 is connected to the inclined pipe 5a, while the other end thereof is connected to the inclined pipe 5b. Accordingly, the heat transfer fluid flowing through the inclined pipe 5a during a normal operation is a heat transfer fluid before being heated by the solar heat collection device 1, while the heat transfer fluid flowing through the inclined pipe 5b is a heat transfer fluid heated by the solar heat collection device 1. In the heat transfer fluid piping 2 of the solar heat collection device 1, the heat transfer fluid flows from the end portion connected to the inclined pipe 5a to the end portion connected to the inclined pipe 5b, so that the heat transfer fluid circulates through the solar heat collection device 1.

Thus, there is formed such a structure that when the heat transfer fluid is to be discharged from the heat transfer fluid piping 2 and the inclined pipes 5a, 5b, it is possible to cause the heat transfer fluid to flow from the top to the bottom depending on the inclinations of the heat transfer fluid piping 2 and the inclined pipes 5a, 5b.

A vent 15 having a vent valve is provided at the highest position of the heat transfer fluid piping 2, and if the vent valve of the vent 15 is opened, air can be introduced into the vent 15 when heat transfer fluid is to be discharged.

Further, a portion of a light collecting mirror 3 of the heat transfer fluid piping 2 forms a heat collecting elements 2a heated by a light collected in a light collecting mirror 3. The light collecting mirror 3 and the heat collecting elements 2a together form a heat collecting unit 3a.

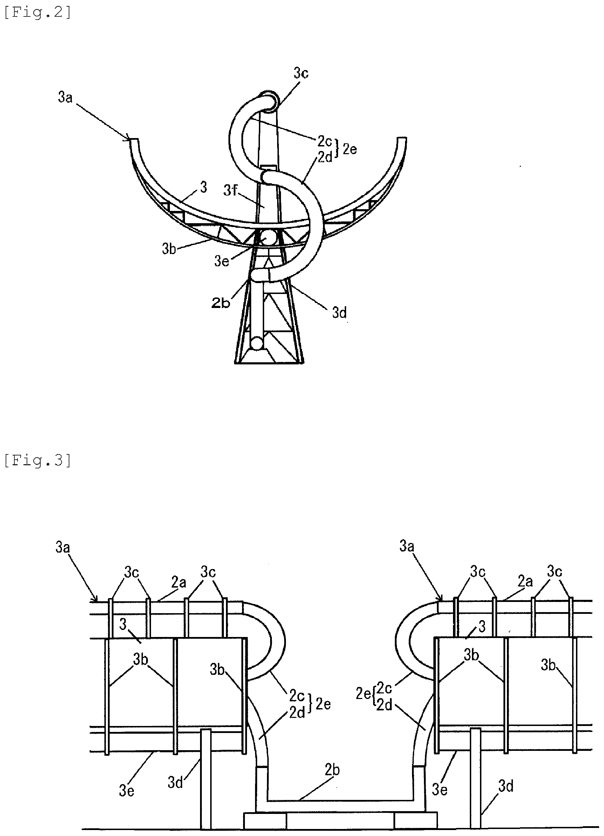

As shown in Figs. 2 and 3, the heat collecting unit 3a includes a light collecting mirror 3 for collecting a sunlight into the heat collecting elements 2a, a heat collecting elements 2a for heating a heat transfer fluid flowing internally by receiving the collected sunlight, a reinforcing member 3b for reinforcing the light collecting mirror 3, a tube element supporting member 3c connected to the reinforcing member 3b for supporting the heat collecting elements 2a at a light collecting position of the light collecting mirror 3c, a leg member 3d supporting the mirror 3, and a rotary cylinder 3e rotatably supported by the leg member 3d and fixed to the reinforcing member 3b.

The light collecting mirror 3 has a substantially circular arc shape (concave shape) in cross section and extends in the left and right directions, collecting the sunlight into a straight pipe-shaped heat collecting elements 2a. The heat collecting elements 2a is provided with an outer tube element through which a heat transfer fluid flows and which transmits light to the outside. A space between the heat collecting elements 2a and the outer tube element becomes substantially a vacuum, forming a vacuum heat insulating structure. A reinforcing member 3b is fixed to the rear surface which is the back side of the reflecting surface of the light collecting mirror 3 to reinforce the light collecting mirror 3. A plurality of such reinforcing members 3b are provided at equal intervals along the length direction of the light collecting mirror 3 and the heat collecting elements 2a.

Further, since the reinforcing members 3b are fixed to a rotary cylinder 3e and are rotatable integrally with the rotary cylinder 3e, an angle of the light collecting mirror 3 can be changed in response to a change in the altitude of the sun. Tube element supporting members 3c are fixed to the reinforcing members 3b and are rotatable integrally with the rotary cylinder 3e while supporting the heat collecting elements 2a. Leg members 3d are provided to rotatably support the light collecting mirror 3, the heat collecting elements 2a, the reinforcing members 3b, and the tube element supporting members 3c by rotatably supporting the rotary cylinder 3e.

Further, at the left and right end portions of the heat collecting unit 3a, the piping 2b is connected to the heat collecting elements 2a via a flexible joints (first flexible joints) 2c and a flexible joints (second flexible joints) 2d. As shown in Fig. 3, between the two heat collecting units 3a, there have been arranged the flexible joints 2c connected to the heat collecting elements 2a, a flexible joints 2d connected to the flexible joints 2c, the piping 2b connected to the flexible tube elements 2d, the flexible joints 2d connected to the piping 2b, the flexible joints 2c connected to the flexible joints 2d, and the heat collecting elements 2a connected to the flexible joints 2c, thus forming the heat transfer fluid piping 2 based on these tube elements. On the other hand, since the two heat collecting units 3a are provided on the slope, the right heat collecting unit 3a is lower than the left heat collecting unit 3a.

The two flexible joints 2c and 2d connected in series are joined to each other while being supported by a flexible support member 3f integrally rotatably attached to the reinforcing member 3b or the rotary cylinder 3e. One of the flexible joints 2c is connected to the flexible joints 2d in a state in which one of its end portions is connected to the heat collecting elements 2a and the other of its end portions is supported by the flexible support member 3f. Therefore, the flexible joints 2c rotates integrally with the rotary cylinder 3e together with the heat collecting elements 2a and the flexible support member 3f. The flexible joints 2c will be deformed due to an expansion or a contraction based on the temperature of the heat collecting elements 2a and can absorb a deformation caused due to the expansion or contraction of the heat collecting elements 2a.

The other flexible joints 2d is connected to the flexible joints 2c in a state in which one end portion thereof is supported by a flexible support member 3f rotatable integrally with the rotary cylinder 3e, while the other end portion of the flexible joints 2d is connected to the fixed piping 2b, deforms due to a movement of the heat collecting elements 2a corresponding to a sunlight altitude, and absorbs a displacement caused due to a rotating movement of the heat collecting elements 2a. These flexible tube elements 2c and 2d are made of a metal such as a well-known stainless steel having a heat resistance corresponding to the temperature of the heat transfer fluid. In addition, the heat collecting elements 2a and the piping 2b are also made of a heat-resistant metal, and the flexible joints 2c, 2d, and the heat collecting elements 2a, have their conductivities respectively.

In Fig. 1, four heat collecting units 3a forming one solar heat collection device 1 are connected in series by virtue of U-shaped heat transfer fluid piping 2. The respective heat collecting units 3a are connected by the piping 2b. Here, the number of heat collecting units 3a constituting the solar heat collection device 1 is not limited to four, but may be more or less than four. Further, in the present embodiment, by using the U-shaped heat transfer fluid piping 2 as described above, the heat collecting units 3a are arranged in two rows.

Further, in the present embodiment, electricity is caused to flow directly to the heat transfer fluid piping 2 including the heat collecting elements 2a made of a metal, the flexible joints 2c, 2d and the piping 2b as described above, thereby causing the heat transfer fluid piping 2 to generate a heat so as to heat the heat transfer fluid piping. Therefore, it is possible to heat the heat transfer fluid piping 2 only by connecting a power source 30 and supplying an electric current therethrough without attaching a heating device such as a heating wire or the like to the outer circumference of each heat collecting elements 2a and each flexible joints 2c. In other words, the power source 30 for supplying an electric current to the heat transfer fluid piping 2 serves as heating means. In this case, since the heat transfer fluid piping 2 itself generates a heat, the heating device does not interfere with a heat reception based on the light collection in each heat collecting elements 2a. In addition, it is not necessary to externally attach a heating device to the flexible joints 2c, 2d which will be deformed as described above, thus making it possible to heat the heat transfer fluid piping with an extremely simple configuration. Such a heating method is, for example, Joule effect heating (impedance heating).

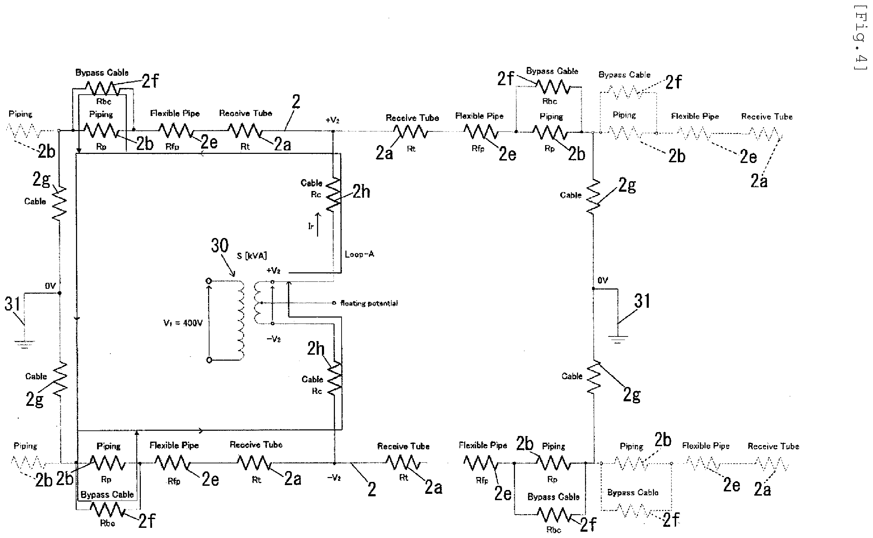

Fig. 4 shows a circuit diagram where an electric current is supplied from a power source (transformer) 30 to the heat transfer fluid piping 2 in one solar heat collection device 1. In the circuit diagram, flexible joints 2e including heat collecting elements 2a, piping 2b, flexible joints 2c and flexible joints 2d of the heat transfer fluid piping 2, bypass cables (bypass circuits, power transmission cables) 2f, and closed circuits (cable wiring) 2g, and power connection cables (wiring) 2h are all indicated by symbols of resistance. Moreover, in Fig. 4, capacity of the power source is described as S (kVA), but it is possible to use a transformer having a necessary capacity according to various conditions.

The power source 30 is, for example, a transformer that transforms an alternating current of single phase 400 V into a voltage of about 30 V, which is a floating power source whose neutral point on the secondary coil side is not grounded. Meanwhile, a power source connection cable 2h is connected from the power source 30 to the heat transfer fluid piping 2. In the present embodiment, as described above, the heat transfer fluid piping 2 is bent into a U-shape, so that a predetermined portion on the upstream side of the heat transfer fluid piping 2 and a predetermined portion on the downstream side thereof are disposed in parallel to each other. In addition, two heat collecting units 3a each including a light collecting mirror 3 and a heat collecting elements 2a are disposed on each of the upstream side and the downstream side of the heat transfer fluid piping 2, respectively.

In the present embodiment, there has been formed a structure in which an electric current is caused to flow from one power source 30 to a portion (block) including one upstream side heat collecting unit 3a and one downstream side heat collecting unit 3a arranged side by side with the upstream side heat collecting unit 3a. Therefore, in the present embodiment, two heat collecting units 3a are provided in each of the upstream side predetermined portion and the downstream side predetermined portion arranged in parallel to each other in U-shaped heat transfer fluid piping 2 of solar heat collection device 1. In Fig. 1, one block is formed including one upstream side heat collecting unit 3a (heat collecting elements 2a) and one downstream side heat collecting unit 3a (heat collecting elements 2a), thus forming two blocks in the heat transfer fluid piping. For example, if three heat collecting units 3a are provided on each of the upstream side and the downstream side of one U-shaped heat transfer fluid piping 2, three blocks are thus formed. The number of the heat collecting units 3a included in one block can be arbitrarily changed depending on the length and the number of the heat collecting units 3a.

In one block, as shown in Fig. 4, as described above, the upstream side and the downstream side of heat transfer fluid piping 2 are arranged in parallel to each other. On the upstream side and the downstream side, for example, various tube elements are connected in series in the order of fixed piping 2b, flexible joints 2e, heat collecting elements 2a, flexible joints 2e, and piping 2b. In Fig. 4, for example, the heat transfer fluid piping 2 on the upper side in the diagram is referred to as upstream side of the heat transfer fluid piping 2, and the heat transfer fluid piping 2 on the lower side in the diagram is referred to as downstream side of the heat transfer fluid piping 2.

The heat collecting elements 2a is, for example, approximately 100 m as whole and is basically covered with an outer tube element for forming a vacuum heat insulation. Such outer tube element is formed by connecting eight divided bodies of the heat collecting element 2a with each outer tube element having a length of about 12 m. A power source can be directly connected to the heat collecting elements 2a in the outer tube elements at the connection portions of the divided bodies of the heat collecting elements 2a. In the present embodiment, the power source connection cable 2h extending from the power source 30 to each of the two heat collecting elements 2a in the block is connected to the connection portion between the divided bodies of the heat collecting elements 2a at the central portion of the heat collecting elements 2a. The upstream portion and the downstream portion of the heat transfer fluid piping 2 are connected by a closed circuit cable 2g at the portion of the piping 2b connected to the left and right of the heat collecting elements 2a of the heat collecting unit 3a via the flexible joints 2e. Also, as described above, the power source 30 is a floating power source, whereas the portion of the closed circuit cable 2g is grounded by the ground 31.

As a result, the power source connection cable 2h extending upwardly from the power source 30 in the drawing is connected, for example, to the central portion of the heat collecting elements 2a on the upstream side of the heat transfer fluid piping 2. In Fig. 4, a pair of left and right heat collecting elements 2a are connected to each other on the upstream side and the downstream side of the heat transfer fluid piping 2, respectively. Here, one heat collecting elements 2a is illustrated as being divided at its central portion, while the power source connection cable 2h is connected to the central portion of the one heat collecting elements 2a.

The power source connection cable 2h heading upward is branched to the right and left at a portion connected to the heat collecting elements 2a, and an electric current is caused to flow from this portion on the left and right in parallel. Since the left and right portions of one block have the same structure, here only the left side portion of the block is described, while the description of the right portion is omitted. An electric current from the power source connection cable 2h extending upward flows to the right and left at the connection portion between the power source connection cable 2h and the heat collecting elements 2a. Electric current on the left side flows from the heat collecting elements 2a of the heat collecting unit 3a toward the flexible joints 2e, further flows in the order of the heat collecting elements 2a, the flexible joints 2e, and the piping 2b, passes through the closed circuit cable 2g from the piping 2b, and then flows to the lower side piping 2b. Furthermore, the electric current flows from the piping 2b to the flexible joints 2e and the heat collecting elements 2a. The electric current flowing through the heat collecting elements 2a flows from the central portion of the heat collecting elements 2a to the lower power source connecting cable 2h and reaches the power source 30. Electric current on the right side of the block flows in the same order as the left side.

Here, the heat collecting elements 2a, the piping 2b, and the flexible joints 2e together constituting the heat transfer fluid piping 2 are different in their material natures, cross-sectional areas, lengths, and heat retention structures. When an electric currents is caused to flow in series at a constant voltage, a heat generation amount based on a resistance value corresponding to material nature, cross-sectional area and length, as well as a heat dissipation amount based on shape and heat retention structure, will be different from one another among these elements. Therefore, when an electric current is simply passed in series, a heat amount produced by the heat collecting elements 2a, the piping 2b, and the flexible joints 2c, 2d is different from an amount of heat dissipation, and there is a possibility that a large difference will occur in temperature in a state where an electric current is flowing.

Here, a heat generation amount (Joule heat) is expressed by H = I² Rt, where H is a heat generation amount, I is a current value, R is a resistance value, and t is time.

In addition, since the same current flows into various resistors (heat collecting elements 2a, piping 2b, flexible tube elements 2e, closed circuit cable 2g, power source connecting cable 2h) arranged in series in the circuit diagram, the heat collecting elements 2a, the piping 2b, the flexible joints 2e, the closed circuit cable 2g, and the power source connecting cable 2h, all acting as resistances, will each have a heat generation amount proportional to their respective resistance values. As shown in Fig. 4, the resistance values of the respective resistors are such that the heat collecting elements 2a is Rt, the piping 2b is Rp, the flexible joints 2e is Rfp, the power source connecting cable 2h is Rc, rendering it possible to calculate a heat generation amount by multiplying each of these parameters by a square of current value and a time. Therefore, if an actual resistance value of each tube element constituting the heat transfer fluid piping 2 is known, an amount of heat generation can also be known. However, since the temperature of each tube element is determined based on an amount of heat generation and a heat dissipation amount, it is necessary to calculate, by experiment or simulation, a heat generation amount or a heat dissipation amount of each tube element, or calculate the temperature of each tube element when an electric current flows therethrough.

In the present embodiment, among the heat collecting elements 2a, the piping 2b, and the flexible joints 2e, it has been confirmed that the temperature of the piping 2b is higher than the temperature of the heat collecting elements 2a and the flexible joints 2e. As compared to the heat collecting elements 2a which needs to obtain a heat from the outside and the flexible joints 2e which will deform, in the piping 2b which will have a shrinkage due to a temperature difference but is in a basically fixed condition and no problem occurs even if thermal insulation with the outside is formed, a heat dissipation amount is small and the temperature is easy to increase due to a heat retention structure having an excellent heat insulating property superior to the heat collecting elements 2 and the flexible joints 2e.

In the present embodiment, when the same electric current flows, for lowering the value of the current flowing through the piping 2b which becomes higher in temperature than the flexible joints 2e and the heat collecting elements 2a, a bypass cable 2f is connected between an end portion connected to the flexible joints 2e of the piping 2b and a portion connected to the closed circuit cable 2g. Namely, the piping 2b and the bypass cable 2f are arranged in parallel, and the current flows separately to the piping 2b and to the bypass cable 2f, so that the value of the current flowing through the piping 2b decreases, and heat generation amount in the piping 2b becomes low, thus rendering it possible to have the temperature of the piping 2b to be closer to the heat collecting elements 2a and the flexible joints 2e.

In the heat transfer fluid piping 2, what occupies a large part is the heat collecting elements 2a. Basically, a voltage and a current are set such that the heat collecting elements 2a will be in a preferable temperature range. On the other hand, since the temperature of the piping 2b becomes higher than needed, the value of the current flowing through the piping 2b is lowered by connecting the bypass cable 2f in parallel with the piping 2b, as described above. At this time, the value of the current flowing to the bypass cable 2f side is determined by the resistance value Rp of the piping 2b and the resistance value Rbc of the bypass cable 2f. That is, if a voltage applied to each of the piping 2b and the bypass cable 2f is Vp, a current Ip flowing through the piping 2b becomes Ip=Vp/Rp, and the current Ibc flowing through the bypass cable 2f becomes Ibc=Vp/Rbc.

In the present embodiment, through the above-described experiment (simulation), when an electric current is passed through the heat transfer fluid piping 2, for setting the heat collecting elements 2a, the flexible joints 2e, and the piping 2b at optimum temperatures, the value of the current flowing through the piping 2b is set and the resistance value of the bypass cable 2f is determined in accordance with the current value, such that the temperature of the piping 2b which has the highest temperature when the same current is applied, will become substantially the same as the heat collecting elements 2a or the flexible joints 2e. Here, the resistance value can be determined by material nature (resistivity), cross-sectional area and length of the bypass cable 2f. For example, such resistance value can be calculated by multiplying a resistivity (specific resistance) with a length, followed by being divided with a cross sectional area.

Basically, a necessary resistance value can be estimated for the bypass cable 2f. For example, a resistance value can be set by the length of the bypass cable 2f. However, it is preferable that the length of the bypass cable 2f be not shorter than the length of the bypassed portion of the piping 2b. Correspondingly, it is necessary to determine the cross-sectional area of the conducting wires serving as the above-described bypass cable 2f (the cross-sectional area of one conducting wire x the number of conducting wires). On the other hand, since the bypass cable 2f is made longer than the bypassed portion of the piping 2b, it is preferable that a portion made longer than the bypass portion of the piping 2b of the bypass cable 2f be collectively stored, for example, into a case. However, when storing the bypass cable 2f into a case, it is preferable that the bypass cable be not wound around a cable reel (coiled shape), but be wound in a small number of turns into a long case of 1 m or longer along the case inner wall, with the longer diameter side being longer.

Using the above-described configuration, among the heat collecting elements 2a, the flexible joints 2e, and the piping 2b (all arranged in series), it is possible to change the value of an electric current flowing into the piping 2b, so that the value of the current will be different from the heat collecting elements 2a and the flexible joints 2e. On the other hand, if the temperature of the flexible joints 2e is higher than that of the heat collecting elements 2a when an electric current flows, it is possible to arrange the bypass cable 2f in parallel to the flexible joints 2e, to make an amount of an electric current flowing into the flexible joints 2e less than an amount of an electric current flowing into the heat collecting elements 2a, to conversely arrange the bypass cable 2f in parallel to the heat collecting elements 2a side, and to make an amount of the electric current flowing into the heat collecting elements 2a less than an amount of the electric current flowing into the flexible joints 2e.

According to the above-described solar collection device 1, when introducing a molten salt as a heat transfer fluid piping into the heat transfer fluid piping 2 at least at the time of start-up, or when discharging the molten salt from the heat transfer fluid piping 2 at the time of maintenance, or when reintroducing the molten salt into the heat transfer fluid piping 2 after maintenance is over, it is possible to heat the heat transfer fluid piping 2 to prevent the molten salt from solidifying.

In such a case, since the heat collecting elements 2a has been made into a structure which will not block the collected solar heat, or a structure which can heat the heat collecting elements 2a even if there is a vacuum heat insulating structure around the outer peripheral portion of the heat collecting elements 2a, and since the solar collection device 1 has adopted a structure capable of causing an electric current to directly flow into the heat transfer fluid piping including the heat collecting elements 2a, it becomes possible to heat the heat collecting elements 2a using an extremely simple structure.

Further, in the flexible joints 2e provided in the heat transfer fluid piping 2 for coping with a movement of the heat collecting elements 2a corresponding to the sun altitude, and for coping with the expansion/contraction caused due to a temperature change, it is possible to cause an electric current to flow into the flexible joints 2e to heat the same, without using a heating device such as a heating wire that follows a deformation of the flexible joints 2e, thus making it possible to heat the flexible joints 2e using a simple structure.

In addition, in the heat transfer fluid piping 2 in which heating is performed by flowing an electricity, since resistance values are different and heat insulating structures are also different, and since the heat collecting elements 2a, the flexible joints 2e, and the piping 2b have heat dissipation amounts different from each other, there is a possibility that a significant temperature difference may occur during heating among various tube elements due to a fact that the current of the same value flows into various tube elements. For example, if the bypass cable 2f is arranged in parallel to the piping 2b whose temperature becomes higher than the heat collecting elements 2a and the flexible joints 2e, it is possible to make an amount of an electricity flowing through the piping 2b less than the electricity amounts flowing into the heat collecting elements 2a and the flexible joints 2e, irrespective of a fact that these tube elements are arranged in series. In this way, regarding the heat collecting elements 2a, the flexible joints 2e, and the piping 2b arranged in series excluding the bypass cable 2f, it is possible to individually set the temperatures of the respective tube elements when an electric current is caused to flow in series, and to set the temperatures of the respective tube elements to make them closer to each other, depending on whether there is the bypass cable 2f, and based on the resistance value of the bypass cable 2f.

In addition, portions of the heat transfer fluid piping 2 disposed substantially parallel to each other including the heat collecting elements 2a arranged substantially in parallel to each other are connected through a closed circuit cable (power transmission cable) 2g and a power source connection cable (power transmission cable) 2h, forming a closed circuit for flowing a current to the heat transfer fluid piping 2. Therefore, if a distance between the heat collecting elements 2a arranged in parallel to each other is short, it is possible to shorten a power transmission cable forming a closed circuit. In this way, it is possible to facilitate the installation work of the power transmission cable and to reduce the cost on the power transmission cable and reduce a power transmission loss.

The flexible joints 2e is composed of a flexible joints 2c which deforms mainly in accordance with an expansion or a contraction based on the temperature of the heat collecting elements 2a, and a flexible joints 2d which is connected to the flexible joints 2c and deforms mainly in accordance with a movement of the heat collecting elements 2a. That is, since the flexible joints 2e is divided into a portion which deforms corresponding to expansion and contraction of the heat collecting elements 2a and a portion which deforms corresponding to a movement of the heat collecting elements 2a, a portion of the flexible joints 2e becomes longer which can freely deform to deal with the two types of deformation, so that it is possible to prevent a problem which is apt to occur due to a fact that the flexible joints 2e hits the surrounding elements in a state where electricity is flowing. On the other hand, it is preferable that a portion where the first flexible joints 2c and the second flexible joints 2d are joined together is in a state capable of moving integrally with the heat collecting elements 2a.

Although the bypass cable 2f serving as bypass electric circuit is composed of a power transmission cable, an insulating layer and a protective cover are provided around an electric conductor, which can be easily used outdoors, and have a low resistance value. Further, since the length of the bypass cable 2f can be freely set, it is easy to finely set the resistance value. In addition, since it is relatively easy to bend a power transmission cable, even if it becomes longer, it is still possible to relatively compactly set such cable in response to an installation place.

In the present embodiment, regarding the solar heat collection device 1 including four heat collecting units 3a, there has been formed a structure in which a power source 30 is provided in each of the two blocks each having two heat collecting units 3a, so that an electric current can be supplied to the heat transfer fluid piping 2. In addition, each of two heat collecting units 3a of one block is divided into two portions, so that electric currents are allowed to flow in parallel. On the other hand, it is also possible to provide a power source 30 to each heat collecting unit 3a to allow an electric current to flow therethrough. Besides, it is possible to connect the power source 30 in a manner such that it is in series with the respective heat transfer fluid piping 2 of the two heat collecting units 3a, without dividing each of the two heat collecting units 3a of one block into two portions and connecting the same in parallel in the power source 30.

### Explanation of Reference Numerals

- 1:: solar heat collection device
- 2:: heat transfer fluid piping
- 2a:: heat collecting elements
- 2b:: piping
- 2c:: flexible joints
- 2d:: flexible joints
- 2e:: flexible joints
- 2f:: bypass cable (bypass electric path)
- 3:: light collecting mirror (light collecting means)
- 30:: power source (heating means)

## Claims

1. A solar heat collection device comprising a heat transfer fluid piping allowing a heat transfer fluid to flow to light collecting position of light collecting means for collecting a solar heat, wherein
the heat transfer fluid piping is formed by connecting in series several types of conductive tube elements including heat collecting elements disposed in light collecting position of the light collecting means;
heating means is provided for heating the tube elements of the heat transfer fluid piping by allowing an electric current to flow in series along the heat transfer fluid piping to several types of tube elements connected in series; and
bypass electricity path is provided to allow an electric current to flow in parallel to at least one of several types of tube elements.

2. The solar heat collection device according to claim 1, wherein the heat transfer fluid is a molten salt.

3. The solar heat collection device according to claim 1 or 2, wherein the tube elements include the heat collecting elements which moves corresponding to sun altitude, fixed piping, and flexible joints connecting the heat collecting elements with the piping.

4. The solar heat collection device according to claim 3, wherein the bypass electricity path is provided in the piping.

5. The solar heat collection device according to any one of claims 1 - 4, wherein resistance value of the bypass electricity path is adjusted by adjusting at least one of material nature, sectional area and length of electric conductor through which an electric current flows in the bypass electricity path.

6. The solar heat collection device according to any one of claims 1 - 5, wherein when heat transfer fluid is introduced into the heat transfer fluid piping and when the heat transfer fluid is discharged from the heat transfer fluid piping, the heating means heats the heat transfer fluid piping by applying an electric current to the tube elements.

7. The solar heat collection device according to any one of claims 1 - 6, wherein
the heat transfer fluid piping has two predetermined portions arranged substantially parallel to each other;
the heat collecting elements are disposed in each of the two predetermined portions, the heat collecting elements of one predetermined portion and the heat collecting elements of the other predetermined portion are substantially parallel with and adjacent to each other; and
a circuit including two heat collecting elements arranged substantially parallel to each other is constituted by wire-connecting the two predetermined portions of the heat transfer fluid piping, while the heating means causes an electric current to flow to the circuit.
